(19) Europäisches Patentamt / European Patent Office / Office européen des brevets

(11) **EP 3 339 880 B1**

(12) **EUROPEAN PATENT SPECIFICATION**

(45) Date of publication and mention
of the grant of the patent:
**03.07.2019 Bulletin 2019/27**

(51) Int Cl.:
***G01S 7/282*** *(2006.01)*     ***G01S 7/292*** *(2006.01)*
***G01S 7/41*** *(2006.01)*

(21) Application number: **17181046.8**

(22) Date of filing: **12.07.2017**

(54) **ADAPTIVE RADAR SYSTEM**

ADAPTIVES RADARSYSTEM

SYSTÈME RADAR DÉCENTRALISÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.12.2016 IN 201641043883**

(43) Date of publication of application:
**27.06.2018 Bulletin 2018/26**

(73) Proprietor: **Airbus Defence and Space GmbH
82024 Taufkirchen (DE)**

(72) Inventor: **SANTRA, Avik
712258 Hooghly, West Bengal (IN)**

(74) Representative: **Isarpatent
Patent- und Rechtsanwälte Behnisch Barth
Charles
Hassa Peckmann & Partner mbB
Friedrichstrasse 31
80801 München (DE)**

(56) References cited:
**US-A- 4 901 082      US-A1- 2011 084 871
US-A1- 2015 160 066      US-B2- 7 327 307**

**Description**

The invention relates to an adaptive radar system and in particular to a reinforcement learning based fully adaptive radar system.

The advancement of electronics, arbitrary waveform generators and high-speed processors has fueled a surge in environment-aware matched illumination techniques for radar systems. In a conventional adaptive radar system, a target can be iteratively tracked using a radar signal reflected from the target. A transmitter unit transmits a radar signal which is reflected by the target and received by a receiver unit. The received radar signal can be processed to determine parameters to be used by the transmitting unit when illuminating the target by transmitting the electromagnetic radar signal.

US 2011/0084871 A1 describes a cognitive radar system comprising a transmitter, a receiver and a processing subsystem which communicates with a lookup table. The processing subsystem determines from the data generated by the receiver what parameters and/or waveforms should be used to illuminate the target and these are stored in a lookup table. The processing subsystem tests a plurality of parameters and waveforms from the lookup table to determine which of these conform best with a predetermined criteria.

Accordingly, it is an object of the present invention to provide a method and apparatus which has a high performance concerning target detection and which can react flexible to changes of the radar environment.

This object is achieved according to a first aspect of the present invention by an adaptive radar system comprising the features of claim 1.

The invention provides according to the first aspect of the present invention an adaptive radar system comprising a transmitter unit adapted to transmit a radar signal,
a receiver unit adapted to receive a reflected radar signal, and
a reinforcement learning engine adapted to compute a control policy used to control signal parameters and waveforms of the radar signal transmitted by the transmitter unit.

In a possible embodiment of the adaptive radar system according to the first aspect of the present invention, the reinforcement learning engine of said adaptive radar system comprises
a reward function generation unit configured to generate a reward function, R, and a reinforcement learning control unit adapted to calculate the control policy based on the generated reward function, R, through reinforcement learning.

In a possible embodiment of the adaptive radar system according to the first aspect of the present invention, the reward function generation unit of said reinforcement learning engine is configured to generate the reward function, R, depending on performance indicators derived from the radar signal received by said receiver unit.

In a still further possible embodiment of the adaptive radar system according to the first aspect of the present invention, the reward function generation unit of said reinforcement learning engine comprises a performance evaluation block adapted to evaluate performance indicators including
a signal to interference plus noise ratio, SINR,
a range resolution,
a Doppler resolution and/or
a peak side-lobe level.

In the adaptive radar system according to the first aspect of the present invention, the adaptive radar system comprises a radar state estimation engine adapted to estimate a radar scene depending on the reflected radar signal received by said receiver unit of said adaptive radar system.

In the adaptive radar system according to the first aspect of the present invention, the radar state estimation engine is adapted to provide a target response of a target and a clutter response of a clutter from the radar signal received by the receiver unit of said adaptive radar system.

In the adaptive radar system according to the first aspect of the present invention, the radar state estimation engine is adapted to categorize the target response to extract target state criteria and to categorize the clutter response to extract clutter state criteria.

In the adaptive radar system according to the first aspect of the present invention, a radar scene state represented by the extracted target state criteria and extracted state clutter criteria is applied by said radar state estimation engine to a data memory storing a radar scene state to waveform map.

In the adaptive radar system according to the first aspect of the present invention, if a matching entry for the applied radar scene state is found in the radar scene state to waveform map of said data memory an associated waveform with a corresponding set of signal parameters is read by a scheduler of said adaptive radar system from said data memory to be transmitted as an exploit waveform, EXP, within a sequence of waveforms forming the radar signal transmitted by the transmitter unit of said adaptive radar system.

In the adaptive radar system according to the first aspect of the present invention, wherein if a matching entry is found a radar signal transmitted by the transmitter unit of said adaptive radar system comprises a sequence of interleaved exploit waveforms, EXP, and explore waveforms, EXL, according to the control policy computed by the reinforcement learning engine of said adaptive radar system.

In a still further possible embodiment of the adaptive radar system according to the first aspect of the present invention, wherein if no matching entry for the applied radar scene state is found in the radar scene state to waveform map of said data memory a reference waveform, REF, is transmitted within a sequence of waveforms forming the radar signal transmitted by the transmitter unit of said adaptive radar system.

In a still further possible embodiment of the adaptive radar system according to the first aspect of the present invention, if no matching entry is found the radar signal transmitted by the transmitter unit of said adaptive radar system comprises a sequence of interleaved reference waveforms, REF, and explore waveforms, EXL, according to the control policy computed by the reinforcement learning engine of the adaptive radar system.

In a further possible embodiment of the adaptive radar system according to the first aspect of the present invention, the transmitted radar signal comprises a sequence of explore waveforms, EXL, during a training phase.

In a further possible embodiment of the adaptive radar system according to the first aspect of the present invention, the reinforcement learning control unit of the reinforcement learning engine is adapted to calculate the control policy based on the generated reward function, R, using a value function algorithm, a temporal difference algorithm or a direct policy search algorithm.

The invention further provides according to a further aspect a method for operating an adaptive radar system comprising the features of claim 9.

In the following, possible embodiments of the different aspects of the present invention are described in more detail with reference to the enclosed figures.

Fig. 1 shows a block diagram of a possible exemplary embodiment of an adaptive radar system according to the first aspect of the present invention;

Fig. 2 shows a flowchart of a possible exemplary embodiment of a method for operating an adaptive radar system such as a radar system illustrated in Fig. 1 according to the second aspect of the present invention;

Fig. 3 illustrates schematically a reinforcement learning control pipeline to compute an optimal control policy to illustrate the operation of the adaptive radar system according to the present invention;

Fig. 4 shows a memory lookup table for illustrating a possible exemplary embodiment of a method and apparatus according to the present invention;

Figs. 5A, 5B, 5C show schematically possible sequences of waveforms of a transmit radar signal during a training phase and during normal operation of the adaptive radar system according to the present invention;

Fig. 6 shows a block diagram for illustrating a possible exemplary embodiment of a reward function generation unit within a reinforcement learning engine of an adaptive radar system according to the first aspect of the present invention.

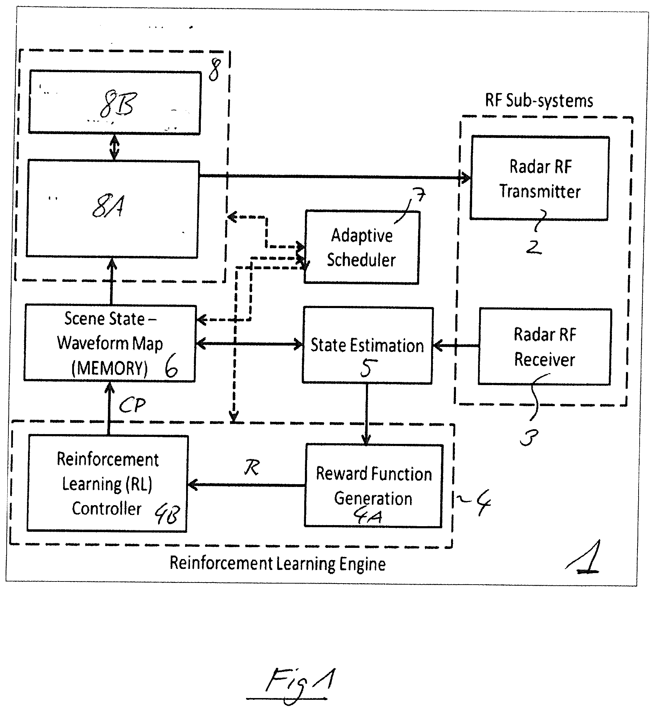

Fig. 1 shows a block diagram of a possible exemplary embodiment of an adaptive radar system 1 according to the first aspect of the present invention.

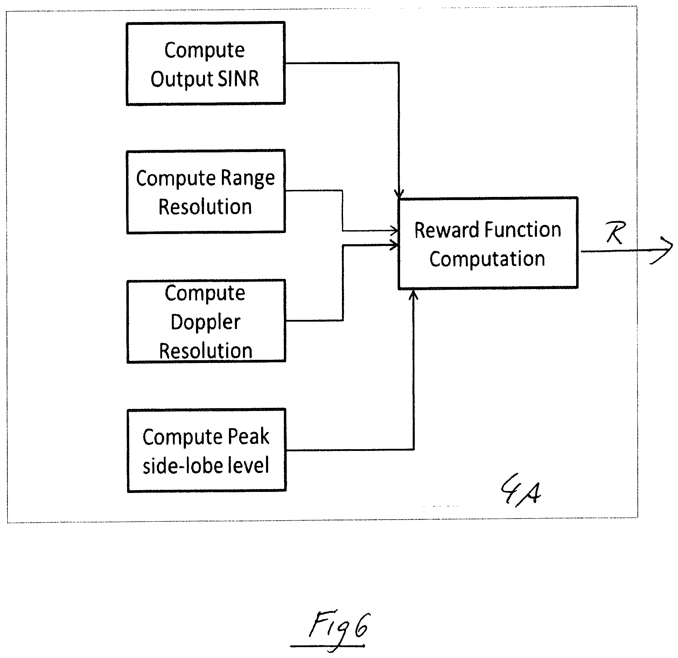

The adaptive radar system 1 comprises RF subsystems including a transmitter unit 2 and a receiver unit 3. The transmitter unit 2 is adapted to transmit a radar signal. The receiver unit 3 of the adaptive radar system 1 is adapted to receive a reflected radar signal. As can be seen in the block diagram of Fig. 1, the adaptive radar system 1 comprises a reinforcement learning engine 4 adapted to compute a control policy CP used to control signal parameters and waveforms of the radar signal transmitted by the transmitter unit 2 of the adaptive radar system 1. The reinforcement learning engine 4 of the adaptive radar system 1 comprises a reward function generation unit 4A configured to generate a reward function R. The reward function generation unit 4A of the reinforcement learning engine 4 is configured to generate a reward function R in a possible embodiment depending on performance indicators derived from the radar signal received by the receiver unit 3 of the adaptive radar system 1. The reinforcement learning engine 4 comprises the reward function generation unit 4A and a reinforcement learning control unit 4B which is configured to calculate the control policy CP based on the reward function R through reinforcement learning. The reward function generation unit 4A of the reinforcement learning engine 4 can comprise in a possible embodiment a performance evaluation block which is adapted to evaluate performance indicators including a signal to interference plus noise ratio, SINR, a range resolution, a Doppler resolution and/or a peak side-lobe level. A possible implementation for a reward function generation unit 4A is also illustrated in Fig. 6. The reward function generation unit 4A comprises a performance evaluation block which can compute an output signal to interference plus noise ratio SINR and a spread ambiguity function to extract or compute a range resolution, a Doppler resolution and/or a peak side-lobe level.

In the illustrated embodiment of the adaptive radar system 1 as shown in Fig. 1, the adaptive radar system 1 further comprises a radar state estimation engine 5 adapted to estimate a radar scene depending on the reflected radar signal received by the receiver unit 3 of the adaptive radar system 1. In a possible embodiment, the radar state estimation engine 5 is adapted to provide a target response of a target and a clutter response of clutter from the radar signal received by the receiver unit 3 of the adaptive radar system 1. The radar state estimation engine 5 can estimate an operating radar scene by separating a target and clutter response and by categorizing them. In a possible implementation, the radar state estimation engine 5 is adapted to categorize the target response to extract target state criteria and to categorize the clutter response to extract clutter state criteria. The target state criteria can for instance comprise a target type, a target movement, a target direction and/or a target class. Extracted target state criteria can for instance indicate whether the target reflecting the radar signal is a point target or an extended target. Further, the extracted target state criteria can indicate whether the target is a slow-moving target or a fast-moving target. Further, the target state criteria may indicate a general target direction, i.e. whether the target is moving closer or moving away from the adaptive radar system 1. Moreover, the target state criteria can indicate a target class of the target such as whether the target is a flying vehicle, a ship or a pedestrian, etc. Besides the target state criteria, the radar state estimation engine 5 can categorize a clutter response to extract clutter state criteria. The clutter state criteria can comprise an indication whether a clutter is present at all, a clutter power spectral density's bandwidth and homogeneity of the clutter statistics. For example, the extracted clutter state criteria can indicate whether a clutter response comprises wideband clutter spectra or narrowband clutter spectra. Further, the extracted clutter state criteria can indicate whether the clutter response comprises a homogeneous, partially homogeneous or heterogeneous clutter.

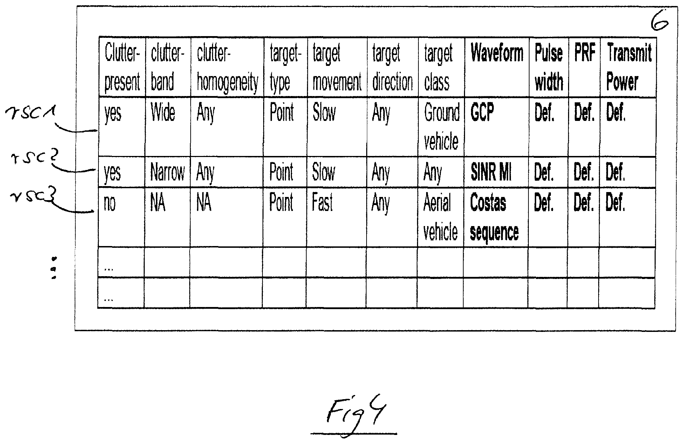

Fig. 4 illustrates an exemplary data content of a memory lookup table including different clutter state criteria and target state criteria. The state estimation engine 5 of the adaptive radar system 1 according to the present invention can apply a radar scene state represented by the extracted target state criteria and the extracted state clutter criteria to a data memory storing a radar scene state to waveform map. In the illustrated embodiment of Fig. 1, the radar scene state to waveform map is stored in a memory 6 connected to the state estimation engine 5. The radar scene can be represented by a set of state criteria including target state criteria and/or clutter state criteria. The sensed or extracted list of radar scene state criteria can be applied to the memory 6 containing the scene state to waveform map to check whether there is a matching entry.

If a matching entry for the applied radar scene state can be found in the radar scene state to waveform map stored in the memory 6 an associated waveform with a corresponding set of signal parameters can be read by a scheduler 7 of the adaptive radar system 1 from a data memory 8 which can be implemented by a bank of adaptive waveforms with an associated set of signal parameters. The signal parameters can comprise in a possible implementation a pulse width of a transmitted pulse, a pulse repetition frequency (PRF), a transmit power and/or a number of pulses per frame. The number of associated operating parameters associated with an adaptive waveform stored in a library of adaptive waveforms can vary.

In the illustrated embodiment of Fig. 1, the data memory 8 comprises a library of adaptive waveforms 8A with an associated set of signal parameters 8B. The library of adaptive waveforms 8A can comprise in a possible implementation standard known waveforms including SINR matched illumination, SNR matched illumination, Golay Complementary Sequence (GCP), Costas Sequence, Frank Zadoff Chu Sequence, Direct Spread Spectrum-LFM Waveforms, Discrete Prolate Spheroid Sequence (DPSS), Weighted Cyclic Algorithm New (CAN & weCAN) as well as Kerdock & Preparata Codes. If a matching entry for the applied radar scene state represented by the target state criteria and/or clutter state criteria can be found in the radar scene state to waveform map stored in the memory 6 as illustrated in Fig. 4, an associated waveform with a corresponding set of signal parameters can be read by the scheduler 7 and be passed on to the transmitter unit 2 to be transmitted next as an optimal waveform by the transmitter unit 2 of the adaptive radar system 1. In the exemplary memory lookup table including the radar scene state to waveform map of Fig. 4, only three different exemplary radar scene states are shown represented by target state criteria and extracted state clutter criteria. The number of radar scenes stored in the memory 6 can be much higher and can increase over time. In the illustrated example a radar scene state is characterized by three clutter state criteria and by four target state criteria. The clutter state criteria indicate whether a clutter is present, the type of the clutter's power spectral density bandidth and the homogeneity of the clutter statistics. The target state criteria indicate a target type, a target movement, a target direction and a target class of the target reflecting the radar signal.

In the illustrated example, a first radar scene state rsc1 is characterized in that a clutter is present, the clutter band is wide and there is clutter homogeneity. Further, the respective radar scene state rsc 1 of the radar scene is characterized in that the target is a point target, moves slowly in any target direction and is of the target class "Ground vehicle". For this specific radar scene state rsc1, an associated adaptive waveform is stored in the library 8A of the data storage 8 with a Golay Complementary Sequence (GCP). Further, a defined set of parameters associated with the respective radar scene state rsc1 within the first row of the illustrated memory lookup table is stored along with the adaptive waveforms in the memory portion 8B of the data storage 8. In the illustrated example, a second radar scene state rsc 2 is characterized in that a clutter is present, the clutter band is narrow and there is any clutter homogeneity.

The second radar scene state rsc2 is further characterized in that the target type is a point target, the target movement of the target is slow, the target moves in any target direction and the target belongs to any target class. The associated adaptive waveform belonging to the second radar scene state is a SINR matched illumination waveform with defined associated signal parameters. Further, in the illustrated example of Fig. 4, the third radar scene state rsc3 in the third row of the memory lookup table is characterized in that there is no clutter present so that no clutter band and clutter homogeneity is applicable. Further, the third radar scene state rsc3 is characterized in that the target type of the target reflecting the radar signal is a point target, that the target movement of the target is fast and that the target is moving in any direction. Further, the third radar scene state rsc3 is characterized in that the target belongs to the target class "Air vehicle". The associated waveform stored in the library of the data storage 8 is a Costas Sequence with associated signal parameters as defined in the lookup table.

The state estimation engine 5 applies the radar scene state rsc comprising the target state criteria and the clutter state criteria extracted from the target response and/or the clutter response of the received radar signal to the memory 6 to check whether a matching entry can be found or not. If a matching entry of the applied radar scene state rsc comprising the different criteria exists and can be found in the memory 6, the associated waveform of the respective radar scene state and its corresponding set of signal parameters are read automatically by the scheduler 7 of the adaptive radar system 1 from the data storage 8 and supplied to the radar signal transmitter 2 to be transmitted as an exploit waveform EXP within a sequence of waveforms forming the radar signal transmitted by the transmitter unit 2 of the adaptive radar system 1.

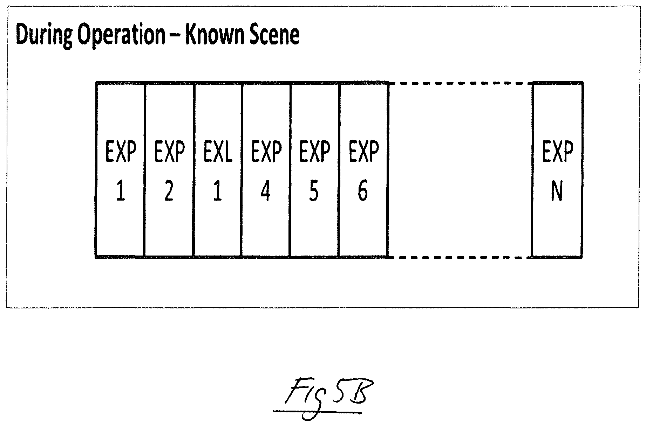

If a matching entry can be found the radar signal transmitted by the transmitter unit 2 of the adaptive radar system 1 comprises a sequence of interleaved exploit waveforms EXP and explore waveforms EXL according to the control policy CP computed by the reinforcement learning engine 4 of the adaptive radar system 1. Fig. 5B illustrates a radar signal comprising a sequence of interleaved exploit waveforms EXP and explore waveforms EXL transmitted by the transmitter 2 of the adaptive radar system 1 during operation for a known radar scene state rsc where a matching entry can be found in the radar scene state to waveform map as illustrated in the example of Fig. 4.

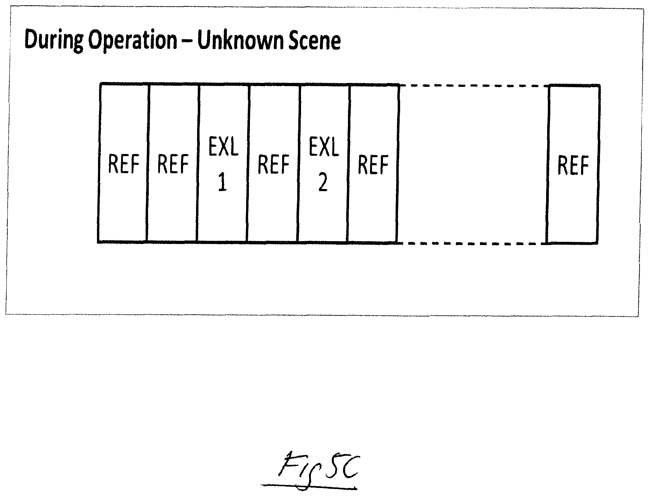

In contrast, if during operation of the adaptive radar system 1 no matching entry for the applied radar scene state rsc can be found in the radar scene state to waveform map stored in memory 6, a reference waveform REF can be transmitted within a sequence of waveforms forming the radar signal transmitted by the transmitter unit 2 of the adaptive radar system 1. If no matching entry is found the radar signal transmitted by the transmitter unit 2 of the adaptive radar system 1 comprises in a possible embodiment a sequence of interleaved reference waveforms REF and explore waveforms EXL according to the control policy CP computed by the reinforcement learning engine of the adaptive radar system 1. Fig. 5C shows an exemplary radar signal comprising a sequence of interleaved reference waveforms REF and explore waveforms EXL transmitted during operation of the adaptive radar system 1 if no matching scene entry for the applied radar scene state can be found in the radar scene state to waveform map.

In case that a matching radar scene state exists in the memory 6 the scheduler 7 directs and passes on the associated adaptive waveform with its operating parameters as an optimal waveform to be transmitted next by the transmitter unit 2 of the adaptive radar system 1. This waveform is referred to at the exploit waveform EXP. Using a reinforcement learning engine 4 allows to balance between an exploit waveform EXP and an explore waveform EXL to investigate whether other waveform or other waveforms and/or other operating signal parameters provide a better performance. As illustrated in Fig. 5B, during operation of the adaptive radar system 1, also for a known radar scene or radar scene state explore waveforms EXL are interleaved within the stream or the sequence of exploit waveforms EXP. In the illustrated embodiment, the transmit radar signal comprises N waveforms wherein the third waveform consists of an explore waveform EXL. The remaining waveforms of the transmit radar signal as illustrated in Fig. 5B are formed by exploit waveforms EXP. The illustrated transmitted radar signal of Fig. 5B can be transmitted during operation of the adaptive radar system 1 if the radar scene is known, i.e. if a matching entry for the applied radar scene state can be found in the radar scene state to waveform map stored in the memory 6 of the adaptive radar system 1. In contrast, if the estimated radar scene does not have an entry in the lookup table, i.e. in the radar scene state rsc to waveform map as illustrated for example in Fig. 4, a reference waveform REF is transmitted by the radar transmitter unit 2. This reference waveform REF can in a possible implementation be formed by a Direct Spread Spectrum-LFM Waveform as default. During operation, if the radar scene is unknown a radar signal as illustrated in Fig. 5C can be transmitted. The transmitted radar signal comprises a sequence of reference waveforms REF including interleaved explore waveforms EXL. In the illustrated embodiment, the transmitted radar signal comprises a third and fifth waveform formed by an explore waveform EXL. An exploration cycle can be emphasized and a near optimal waveform can be derived by trying different waveforms in an exploration cycle and passing an appropriate derived reward function R based on the performance compared to the reference waveform REF to the reinforcement learning engine 4 that computes the optimal control policy CP. The reinforcement learning control unit 4B of the reinforcement learning engine 4 can calculate an optimal control policy CP based on the generated reward function R using standard calculation techniques including value function approaches, temporal difference method approaches and direct policy search approaches. The reward function generation unit 4A of the reinforcement learning engine 4 can comprise a performance evaluation block which is adapted to compute the output signal to interference noise plus ratio SINR and a spread ambiguity function to extract or compute a range resolution, a Doppler resolution and/or a peak side-lobe level using the explore waveform EXL by comparing it to the reference waveforms REF or with the exploit waveforms EXP. The comparison is performed with the reference waveform REF when a scene entry is missing in the memory 6 and the comparison will be with the exploit waveform EXP if there exists a scene entry in the radar scene state to waveform map stored in the memory 6.

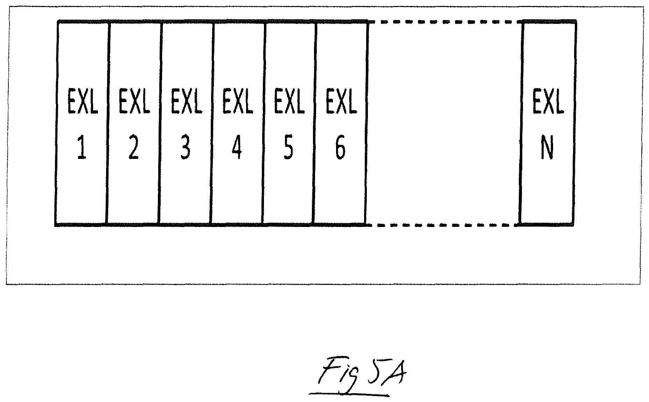

In a possible embodiment, the adaptive radar system 1 according to the first aspect of the present invention can be trained in a training phase using a training radar signal as illustrated in Fig. 5A consisting of explore waveforms EXL. The adaptive radar system 1 can be trained by placing known or standard cases during a calibration phase to create memory entries. Subsequently, during its operation, the reinforcement learning engine 4 learns more radar scenes and creates and updates an optimal waveform parameter set in the data storage 8. In a possible embodiment, the reward function R which is a mandatory input to the reinforcement learning controller 4B can be computed automatically by using various performance indicators such as output SINR, a range resolution, a Doppler resolution and/or a peak side-lobe level of the target of interest. In an alternative embodiment, the reward function R can be manually fed, for instance by a user. The user can for instance provide a positive reward for detection of a small RCS target, a target approaching the radar, etc. Moreover, a user can provide a negative reward for a misdetection or a false alarm.

The adaptive radar system 1 can work in a possible embodiment in a tracking mode if a preliminary knowledge of the target is gathered. Then, through choice of an optimal waveform, an optimal performance can be reached during exploitation. During operation, the adaptive radar system 1 can explore other waveforms which enhance the radar system performance further. The adaptive radar system 1 according to the first aspect of the present invention has also the ability to periodically learn new or additional radar scenes and its corresponding optimal waveforms. As illustrated in context with Figs. 5A, 5B, 5C, the different sequences of waveforms can be transmitted during a training phase and during a normal operation phase. During a training and/or calibration phase, the slots/symbols are formed by explore symbols EXL. This is performed by transmitting adaptive waveforms from the library of adaptive waveforms stored in the memory portion 8A of the data storage 8 with associated operating parameters stored in the memory portion 8B of the data storage 8. A benchmarking with the reference waveforms REF can be performed. Reference waveforms can comprise in a possible implementation a Direct Spread Spectrum-LFM waveform. Figs. 5B, 5C illustrate the sequence of radar waveforms transmitted during normal operation of the radar system 1 depending whether the radar scene is known or not known. During operation, if a radar scene can be classified as one from the list or lookup table LUT stored in the memory 6 mostly exploit symbols EXP are transmitted as the optimal waveform as read from the lookup table. However, in some slots or symbols, explore waveforms EXL are transmitted by the radar transmitter unit 2 to test whether a new suitable waveform is better and provides a higher performance. In such a case, a benchmarking is performed with the other exploit waveforms/slots EXP.

In contrast, during operation, if the radar scene is unknown and is classified as a radar scene which does not have a corresponding entry in the lookup table LUT stored in the memory 6, mostly reference waveforms or reference symbols REF are transmitted by the radar transmitter unit 2. These reference symbols REF can in a possible embodiment be Direct Spread Spectrum-LFM waveforms. Further, during operation for an unknown radar scene, some symbols or slots comprise explore symbols EXL. In the illustrated example of Fig. 5C, the third and fifth symbol are formed by explore symbols or explore slots EXP.

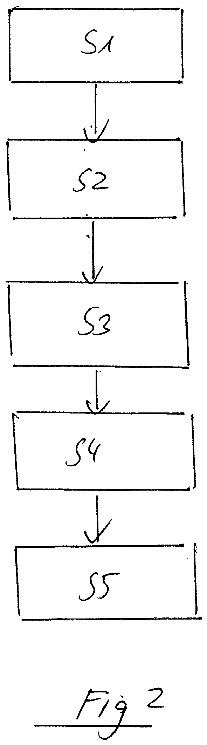

Fig. 2 illustrates a flowchart of a possible exemplary embodiment of a method for operating an adaptive radar system 1 such as the radar system illustrated in Fig. 1.

In a first step S1, a radar signal is transmitted by a transmitter unit of the adaptive radar system 1.

In a further step S2, a reflected radar signal is received by a receiver unit of the adaptive radar system 1.

In a further step S3, a reward function R is generated depending on performance indicators derived from the radar signal received by the receiver unit.

In a further step S4, a control policy CP is calculated based on the generated reward function R through reinforcement learning.

Finally, in step S5, waveforms and associated signal parameters of the transmitted radar signal are selected or controlled according to the calculated control policy CP.

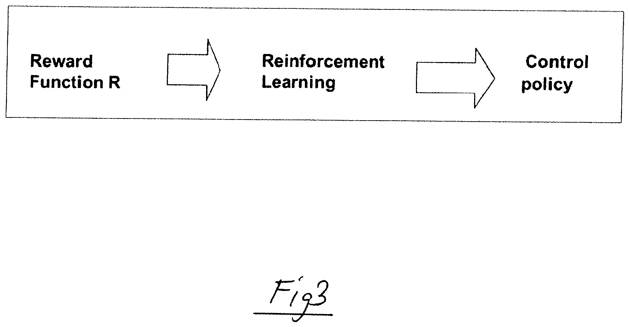

Fig. 3 illustrates a reinforcement learning controller pipeline to compute an optimal control policy CP as employed by the method and apparatus according to the present invention. From a reward function R, a control policy CP is computed through reinforcement learning. Rewards can be based on detection of targets. A reward can be a value proportional to a performance improvement.

The reinforcement learning can be performed by the reinforcement learning controller 4B on the basis of the received reward function R using a value function reinforcement learning algorithm, a temporal difference reinforcement learning algorithm and/or a direct policy search reinforcement learning algorithm. The computed control policy is used to select or control signal parameters and adaptive waveforms of the radar signal transmitted by a transmitter unit of the adaptive radar system 1.

The reward function generation unit 4A can compute the reward function R in a possible embodiment depending on performance indicators derived from the received radar signal. In a possible embodiment, the reward function generation unit 4A calculates a reward function R depending on a signal to interference noise plus ratio, SINR, a range resolution, a Doppler resolution and a peak side-lobe level according to a configurable reward function as follows:

$$R = w_1 \frac{SINR_{exl} - SINR_{ref}}{SINR_{ref}} + w_2 \frac{(\Delta r_{exl} - \Delta r_{ref})}{\Delta r_{ref}} + w_3 \frac{(\Delta f_{exl} - \Delta f_{ref})}{\Delta f_{ref}}$$
$$+ w_4 \frac{(side.peak_{ref} - side.peak_{(exl)})}{side.peak_{ref}}$$

The adaptive or cognitive radar system 1 according to the first aspect of the present comprises a reinforcement learning engine 4 including a reinforcement learning control unit 4B and uses a library of adaptive waveforms and their associated operating parameters. The adaptive radar system 1 implements artificial intelligence and is adapted to learn, memorize and to act to the respective radar scene. The adaptive radar system 1 according to the present invention can even detect very small RCS targets in dense background with different clutter patterns or other complex radar environments such as foliage, EMC interferences, etc. Furthermore, the adaptive radar system 1 can dynamically improve its range resolution, Doppler resolution and radar range operation during operation on the fly. The adaptive radar system 1 is adapted to detect an accurate position of a target and its velocity. Depending on the current radar scene, the adaptive radar system 1 can adapt the waveforms and the control signal parameters of the transmitted radar signal dynamically depending on the current situation and radar scene. The adaptive radar system 1 provides an improved performance in terms of target detection with relative low transmit power. The adaptive radar system 1 comprises a cognitive ability and senses its operating environment. The adaptive radar system 1 adapts the signal waveform and signal waveforms of the transmitted radar signal according to a control policy CP derived from a reinforcement learning based mechanism and implemented in a reinforcement learning engine 4. The radar system 1 can be trained in a training phase during calibration and is capable to continue to learn radar scenes during its operation. The reinforcement learning mechanism implemented by the reinforcement learning engine 4 of the adaptive radar system 1 provides learning what is an optimal action given a situation or radar scene so as to maximize the reward. The reinforcement learning engine 4 allows to learn which actions performed by the adaptive radar system 1 provides the highest reward. The adaptive radar system 1 is able to sense the state of the environment and can take actions that affect the state of the environment. The control policy cp provided by the reinforcement learning engine 4 allows a mapping from the perceived states of the environment to the actions performed by the adaptive radar system 1. The reward function R generated by the reward function generation unit 4A can map each perceived state of the environment to a single number, i.e. a reward, indicating an intrinsic desirability of the respective state. A value function can specify the total reward an agent can expect when being in said state. This can be used to indicate a long-term desirability of the respective state. In a possible embodiment, a model of the environment can be implemented by the reinforcement learning engine 4 which with a given state and action predicts the next state and reward. The method for operating the adaptive radar system 1 as illustrated in the flowchart of Fig. 2 can be performed in real time. The reinforcement learning model implemented by the reinforcement learning engine 4 can comprise in a possible embodiment a set of environment and agent states, a set of actions of the agent, policies of transitioning from states to actions, rules that determine a scalar immediate reward of a transition and rules that can describe what the agent observes. The reinforcement learning engine 4 may interact with the environment in discrete time steps. At each time t, the agent can receive an observation which may include a reward. Then, the agent chooses an action from a set of available actions which can have an impact on the environment. The environment moves on to a new state and a reward associated with the transition is determined. The goal of the reinforcement learning mechanism implemented by the reinforcement learning engine 4 is to collect as much rewards as possible. The reinforcement learning mechanism implemented by the reinforcement learning engine 4 allows to learn its behaviour based on a feedback from the environment. The reinforcement learning engine 4 of the adaptive radar system 1 can be implemented in software and/or hardware. The reinforcement learning mechanism implemented in the reinforcement learning engine 4 of the adaptive radar system 1 involves finding a balance between exploration (of unchartered territory) and exploitation (of current knowledge). The adaptive radar system 1 according to the first aspect of the present invention and the method for operating the adaptive radar system 1 according to the second aspect of the invention can be used for any kind of targets reflecting radar signals. It can be used for target tracking and/or target recognition.

REFERENCE SIGNS

1      adaptive radar system

2 transmitter unit
3 receiver unit
4 reinforcement learning engine
4A reward function generation unit
4B reinforcement learning control unit
5 radar state estimation engine
6 memory
7 schedule
8 data storage
8A waveform library
8B operation parameter memory portion

**Claims**

1. An adaptive radar system (1) comprising:

   a transmitter unit (2) adapted to transmit a radar signal;
   a receiver unit (3) adapted to receive a reflected radar signal;
   a reinforcement learning engine (4) adapted to compute a control policy (CP) used to control signal parameters and waveforms of the radar signal transmitted by the transmitter unit (2);
   a radar state estimation engine (5) which is adapted to estimate a radar scene depending on the reflected radar signal received by the receiver unit (3), to provide a target response of a target and a clutter response of a clutter from the radar signal received by the receiver unit (3) of said adaptive radar system (1), to categorize the target response to extract target state criteria, and to categorize the clutter response to extract clutter state criteria, wherein said radar state estimation engine (5) is configured to apply a radar scene state represented by the extracted target state criteria and the extracted clutter state criteria to a memory (6) storing a radar scene state to waveform lookup table;
   an adaptive scheduler (7);
   a data memory (8) comprising a library of adaptive waveforms (8A) with an associate set of signal parameters (8B);
   wherein if a matching entry for the applied radar scene state is found in the radar scene state to waveform lookup table of the memory (6) the adaptive scheduler (7) is configured to read an associated waveform with a corresponding set of signal parameters from the data memory (8) and to transmit said read waveform and signal parameters as an exploit waveform (EXP) within a sequence of waveforms forming the radar signal to be transmitted by the transmitter unit (2); and
   wherein if a matching entry is found the scheduler (7) is further configured to transmit explore waveforms (EXL) according to the control policy (CP) computed by the reinforcement learning engine (4) to the transmitter unit (2) so that the radar signal transmitted by the transmitter unit (2) comprises a sequence of interleaved exploit waveforms (EXP) and explore waveforms (EXL).

2. The adaptive radar system according to claim 1 wherein the reinforcement learning engine (4) comprises:

   a reward function generation unit (4A) configured to generate a reward function (R), and
   a reinforcement learning control unit (4B) adapted to calculate the control policy (CP) based on the generated reward function (R) through reinforcement learning.

3. The adaptive radar system according to claim 2 wherein the reward function generation unit (4A) of the reinforcement learning engine (4) is configured to generate the reward function (R) depending on performance indicators derived from the radar signal received by the receiver unit (3).

4. The adaptive radar system according to claim 2 or 3 wherein the reward function generation unit (4A) of said reinforcement learning engine (4) comprises a performance evaluation block adapted to evaluate performance indicators including a signal to interference noise ratio, SINR,
   a range resolution,
   a Doppler resolution and/or
   a peak side-lobe level.

5. The adaptive radar system according to any of the preceding claims wherein if no matching entry for the applied radar scene state is found in the radar scene state to waveform lookup table of said memory (6) a reference waveform (REF) is transmitted within a sequence of waveforms forming the radar signal transmitted by the transmitter unit (2) of said adaptive radar system (1), wherein the reference waveform (REF) is formed by a Direct Spread Spectrum-LFM waveform as default.

6. The adaptive radar system according to claim 5 wherein if no matching entry is found the radar signal transmitted by the transmitter unit (2) of said adaptive radar system (1) comprises a sequence of interleaved reference waveforms (REF) and explore waveforms (EXL) according to the control policy (CP) computed by the reinforcement learning engine (4) of the adaptive radar system (1).

7. The adaptive radar system according to any of the preceding claims wherein during a training phase the transmitted radar signal comprises a sequence of explore waveforms (EXL).

8. The adaptive radar system to any of the preceding claims 2 to 7 wherein the reinforcement learning control unit (4B) of said reinforcement learning engine (4) is adapted to calculate the control policy (CP) based on the generated reward function (R) using a value function algorithm, a temporal difference algorithm or a direct policy search algorithm.

9. A method for operating an adaptive radar system (1) comprising the steps of:

transmitting (S1) a radar signal by a transmitter unit (2) of said adaptive radar system (1);
receiving (S2) a reflected radar signal by a receiver unit (3) of the adaptive radar system (1);
estimating a radar scene depending on the reflected radar signal received by said receiver unit (2) by means of a radar state estimation engine (5) of said adaptive radar system (1);
providing a target response of a target and a clutter response of a clutter from the radar signal received by the receiver unit (3) by means of the radar state estimation engine;
categorizing the target response to extract target state criteria and categorizing the clutter response to extract clutter state criteria by means of the radar state estimation engine (5);
applying a radar scene state represented by the extracted target state criteria and extracted state clutter criteria by said radar state estimation engine (5) to a data memory storing (6) a radar scene state to waveform lookup table;
generating (S3) a reward function (R) depending on performance indicators derived from the radar signal received by the receiver unit of the adaptive radar system;
calculating (S4) a control policy (CP) based on the generated reward function (R) through reinforcement learning;
controlling (S5) waveforms and signal parameters of the transmitted radar signal according to the calculated control policy (CP), wherein if a matching entry for the applied radar scene state is found in the radar scene state to waveform map of said data memory (6) a scheduler (7) of said adaptive radar system reads an associated waveform with a corresponding set of signal parameters from a data memory (8) comprising a library of adaptive waveforms (8A) with an associate set of signal parameters (8B) as an exploit waveform, EXP, and the transmitter unit (2) transmits a radar signal which comprises a sequence of interleaved exploit waveforms, EXP, and explore waveforms, EXL, according to the control policy (CP) computed by the reinforcement learning engine (4).

**Patentansprüche**

1. Adaptives Radarsystem (1), das Folgendes umfasst:

eine Sendeeinheit (2), die angepasst ist, ein Radarsignal zu übertragen;
eine Empfangseinheit (3), die angepasst ist, ein reflektiertes Radarsignal zu empfangen;
eine Verstärkungslernmaschine (4), die angepasst ist, eine Steuerrichtlinie (CP) zu berechnen, die verwendet wird, um Signalparameter und Wellenformen des Radarsignals, das von der Sendeeinheit (2) übertragen wird, zu steuern;
eine Radarzustandsschätzmaschine (5), die angepasst ist, in Abhängigkeit vom reflektierten Radarsignal, das von der Empfangseinheit (3) empfangen wurde, eine Radarszene zu schätzen, um eine Zielreaktion eines Ziels und eine Störechoreaktion eines Störechos vom Radarsignal, das von der Empfangseinheit (3) des adaptiven Radarsystems (1) empfangen wurde, bereitzustellen, die Zielreaktion zu kategorisieren, um Zielzustandskriterien zu extrahieren, und die Störechoreaktion zu kategorisieren, um Störechozustandskriterien zu extrahieren, wobei die Radarzustandsschätzmaschine (5) dazu ausgelegt ist, einen Radarszenenzustand, der durch die extrahierten Zielzustandskriterien und die extrahierten Steuerechozustandskriterien repräsentiert ist, auf einen Speicher (6) anzuwenden, in dem eine Radarszenenzustand-Wellenform-Nachschlagetabelle gespeichert ist; einen adaptiven Planer (7);

einen Datenspeicher (8), der eine Bibliothek von adaptiven Wellenformen (8A) mit einem verknüpften Satz von Signalparametern (8B) umfasst;

wobei, wenn ein übereinstimmender Eintrag für den angewendeten Radarszenenzustand in der Radarszenenzustand-Wellenform-Nachschlagetabelle des Speichers (6) gefunden wird, der adaptive Planer (7) dazu ausgelegt ist, eine verknüpfte Wellenform mit einem entsprechenden Satz von Signalparametern aus dem Datenspeicher (8) auszulesen und die gelesene Wellenform und die gelesenen Signalparameter als eine Nutzungswellenform (EXP) in einer Folge von Wellenformen, die das von der Sendeeinheit (2) zu übertragende Radarsignal bilden, zu übertragen; und

wobei, wenn ein übereinstimmender Eintrag gefunden wird, der Planer (7) ferner dazu ausgelegt ist, Erkundungswellenformen (EXL) gemäß der Steuerrichtlinie (CP), die von der Verstärkungslernmaschine (4) berechnet wurde, zur Sendeeinheit (2) zu übertragen, derart, dass das Radarsignal, das von der Sendeeinheit (2) übertragen wird, eine Folge von verschachtelten Nutzungswellenformen (EXP) und Erkundungswellenformen (EXL) umfasst.

2. Adaptives Radarsystem nach Anspruch 1, wobei die Verstärkungslernmaschine (4) Folgendes umfasst:

eine Belohnungsfunktionserzeugungseinheit (4A), die dazu ausgelegt ist, eine Belohnungsfunktion (R) zu erzeugen, und

eine Verstärkungslernensteuereinheit (4B), die angepasst ist, die Steuerrichtlinie (CP) auf Basis der erzeugten Belohnungsfunktion (R) durch Verstärkungslernen zu berechnen.

3. Adaptives Radarsystem nach Anspruch 2, wobei die Belohnungsfunktionserzeugungseinheit (4A) der Verstärkungslernmaschine (4) dazu ausgelegt ist, die Belohnungsfunktion (R) in Abhängigkeit von Leistungsindikatoren, die aus dem von der Empfangseinheit (3) empfangenen Radarsignal abgeleitet werden, zu erzeugen.

4. Adaptives Radarsystem nach Anspruch 2 oder 3, wobei die Belohnungsfunktionserzeugungseinheit (4A) der Verstärkungslernmaschine (4) einen Leistungsbeurteilungsblock umfasst, der angepasst ist, Leistungsindikatoren zu beurteilen, die Folgendes beinhalten: ein Signal-Interferenzrauschen-Verhältnis, SINR,
eine Bereichsauflösung,
eine Dopplerauflösung und/oder
einen Spitze-Nebenkeulen-Pegel.

5. Adaptives Radarsystem nach einem der vorhergehenden Ansprüche, wobei, wenn kein übereinstimmender Eintrag für den angewendeten Radarszenenzustand in der Radarszenenzustand-Wellenform-Nachschlagetabelle des Speichers (6) gefunden wird, eine Referenzwellenform (REF) in einer Folge von Wellenformen, die das von der Sendeeinheit (2) des adaptiven Radarsystems (1) übertragene Radarsignal bilden, übertragen wird, wobei die Referenzwellenform (REF) als Standard durch eine Direktspreizspektrum-LFM-Wellenform gebildet wird.

6. Adaptives Radarsystem nach Anspruch 5, wobei, wenn kein übereinstimmender Eintrag gefunden wird, das von der Sendeeinheit (2) des adaptiven Radarsystems (1) übertragene Radarsignal eine Folge von verschachtelten Referenzwellenformen (REF) und Erkundungswellenformen (EXL) gemäß der Steuerrichtlinie (CP), die von der Verstärkungslernmaschine (4) des adaptiven Radarsystems (1) berechnet wurde, umfasst.

7. Adaptives Radarsystem nach einem der vorhergehenden Ansprüche, wobei das übertragene Radarsignal während einer Trainingsphase eine Folge von Erkundungswellenformen (EXL) umfasst.

8. Adaptives Radarsystem nach einem der vorhergehenden Ansprüche 2 bis 7, wobei die Verstärkungslernensteuereinheit (4B) der Verstärkungslernmaschine (4) angepasst ist, die Steuerrichtlinie (CP) auf Basis der erzeugten Belohnungsfunktion (R) unter Verwendung eines Wertefunktionsalgorithmus, eines Zeitdifferenzalgorithmus oder eines Richtliniendirektsuchealgorithmus zu berechnen.

9. Verfahren zum Betreiben eines adaptiven Radarsystems (1), das die folgenden Schritte umfasst:

Übertragen (S1) eines Radarsignals durch eine Sendeeinheit (2) des adaptiven Radarsystems (1);

Empfangen (S2) eines reflektierten Radarsignals durch eine Empfangseinheit (3) des adaptiven Radarsystems (1);

Schätzen einer Radarszene in Abhängigkeit von dem von der Empfangseinheit (2) empfangenen reflektierten Radarsignal mittels einer Radarzustandsschätzmaschine (5) des adaptiven Radarsystems (1);

Bereitstellen einer Zielreaktion eines Ziels und einer Störechoreaktion eines Störechos von dem von der Empfangseinheit (3) empfangenen Radarsignal mittels der Radarzustandsschätzmaschine;

Kategorisieren der Zielreaktion, um Zielzustandskriterien zu extrahieren und Kategorisieren der Störechoreaktion, um Störechozustandskriterien mittels der Radarzustandsschätzmaschine (5) zu extrahieren;

Anwenden eines Radarszenenzustands, der durch die extrahierten Zielzustandskriterien und die extrahierten Zustandsstörechokriterien repräsentiert ist, durch die Radarzustandsschätzmaschine (5) auf einen Datenspeicher, in dem eine Radarszenenzustand-Wellenform-Nachschlagetabelle gespeichert (6) ist;

Erzeugen (S3) einer Belohnungsfunktion (R) in Abhängigkeit von Leistungsindikatoren, die aus dem von der Empfangseinheit des adaptiven Radarsystems empfangenen Radarsignal abgeleitet werden;

Berechnen (S4) einer Steuerrichtlinie (CP) durch Verstärkungslernen auf Basis der erzeugten Belohnungsfunktion (R);

Steuern (S5) von Wellenformen und Signalparametern des übertragenen Radarsignals gemäß der berechneten Steuerrichtlinie (CP), wobei, wenn ein übereinstimmender Eintrag für den angewendeten Radarszenenzustand in der Radarszenenzustand-Wellenform-Karte des Datenspeichers (6) gefunden wird, ein Planer (7) des adaptiven Radarsystems eine verknüpfte Wellenform mit einem entsprechenden Satz von Signalparametern aus einem Datenspeicher (8), der eine Bibliothek von adaptiven Wellenformen (8A) mit einem verknüpften Satz von Signalparametern (8B) umfasst, als eine Nutzungswellenform, EXP, ausliest und die Sendeeinheit (2) ein Radarsignal, das eine Folge von verschachtelten Nutzungswellenformen, EXP, und Erkundungswellenformen, EXL, umfasst, gemäß der Steuerrichtlinie (CP), die von der Verstärkungslernmaschine (4) berechnet wurde, überträgt.

## Revendications

1. Système radar adaptatif (1) comprenant :

   une unité de transmission (2) conçue pour transmettre un signal radar ;

   une unité de réception (3) conçue pour recevoir un signal radar réfléchi ;

   un moteur d'apprentissage par renforcement (4) conçu pour calculer une politique de commande (CP) utilisée pour commander des paramètres et des formes d'onde de signal du signal radar transmis par l'unité de transmission (2) ;

   un moteur d'estimation d'état de radar (5) qui est conçu pour estimer une scène de radar en fonction du signal radar réfléchi reçu par l'unité de réception (3) pour fournir une réponse de cible d'une cible et une réponse de fouillis d'un fouillis à partir du signal radar reçu par l'unité de réception (3) dudit système radar adaptatif (1) pour catégoriser la réponse de cible pour extraire des critères d'état de cible, et pour catégoriser la réponse de fouillis pour extraire des critères d'état de fouillis, dans lequel ledit moteur d'estimation d'état de radar (5) est configuré pour appliquer un état de scène de radar représenté par les critères d'état de cible extraits et les critères d'état de fouillis extraits à une mémoire (6) stockant un état de scène de radar dans une table de consultation de forme d'onde ;

   un planificateur adaptatif (7) ;

   une mémoire de données (8) comprenant une bibliothèque de formes d'onde adaptatives (8A) avec un ensemble associé de paramètres de signal (8B) ;

   dans lequel, si une entrée de mise en correspondance pour l'état de scène de radar appliqué est trouvée dans l'état de scène de radar dans la table de consultation de forme d'onde de la mémoire (6), le planificateur adaptatif (7) est configuré pour lire une forme d'onde associée avec un ensemble correspondant de paramètres de signal à partir de la mémoire de données (8) et pour transmettre ladite forme d'onde lue et lesdits paramètres de signal lus sous la forme d'une forme d'onde d'exploitation (EXP) dans une séquence de formes d'onde formant le signal radar qui doit être transmis par l'unité de transmission (2) ; et

   dans lequel, si une entrée de mise en correspondance est trouvée, le planificateur adaptatif (7) est en outre configuré pour transmettre des formes d'onde d'exploration (EXL) en fonction de la politique de commande (CP) calculée par le moteur d'apprentissage par renforcement (4) à l'unité de transmission (2) de telle sorte que le signal radar transmis par l'unité de transmission (2) comprend une séquence de formes d'onde d'exploitation (EXP) et de formes d'onde d'exploration (EXL) entrelacées.

**2.** Système radar adaptatif selon la revendication 1, dans lequel le moteur d'apprentissage par renforcement (4) comprend :

une unité de génération de fonction de récompense (4A) configurée pour générer une fonction de récompense (R), et

une unité de commande d'apprentissage par renforcement (4B) conçue pour calculer la politique de commande (CP) en se basant sur la fonction de récompense générée (R) au moyen d'un apprentissage par renforcement.

**3.** Système radar adaptatif selon la revendication 2, dans lequel l'unité de génération de fonction de récompense (4A) du moteur d'apprentissage par renforcement (4) est configurée pour générer la fonction de récompense (R) en fonction d'indicateurs de performance dérivés du signal radar reçu par l'unité de réception (3).

**4.** Système radar adaptatif selon la revendication 2 ou 3, dans lequel l'unité de génération de fonction de récompense (4A) dudit moteur d'apprentissage par renforcement (4) comprend un bloc d'évaluation de performance conçu pour évaluer des indicateurs de performance comprenant un rapport signal sur bruit d'interférence (SINR),
une résolution de plage,
une résolution Doppler et/ou
un niveau de crête de lobe latéral.

**5.** Système radar adaptatif selon l'une quelconque des revendications précédentes, dans lequel, si aucune entrée de mise en correspondance pour l'état de scène de radar appliqué n'est trouvée dans l'état de scène de radar dans la table de consultation de forme d'onde de ladite mémoire (6), une forme d'onde de référence (REF) est transmise dans une séquence de formes d'onde formant le signal radar transmis par l'unité de transmission (2) dudit système radar adaptatif (1), dans lequel la forme d'onde de référence (REF) est formée par une forme d'onde de spectre étalé direct-LFM par défaut.

**6.** Système radar adaptatif selon la revendication 5, dans lequel, si aucune entrée de mise en correspondance n'est trouvée, le signal radar transmis par l'unité de transmission (2) dudit système radar adaptatif (1) comprend une séquence de formes d'onde de référence (REF) et de formes d'onde d'exploration (EXL) entrelacées en fonction de la politique de commande (CP) calculée par le moteur d'apprentissage par renforcement (4) du système radar adaptatif (1).

**7.** Système radar adaptatif selon l'une quelconque des revendications précédentes, dans lequel, pendant une phase d'apprentissage, le signal radar transmis comprend une séquence de formes d'onde d'exploration (EXL) .

**8.** Système radar adaptatif selon l'une quelconque des revendications 2 à 7, dans lequel l'unité de commande d'apprentissage par renforcement (4B) dudit moteur d'apprentissage par renforcement (4) est conçue pour calculer la politique de commande (CP) en se basant sur la fonction de récompense générée (R) à l'aide d'un algorithme de fonction de valeur, d'un algorithme de différence temporelle ou d'un algorithme de recherche de politique directe.

**9.** Procédé pour faire fonctionner un système radar adaptatif (1) comprenant les étapes consistant :

à transmettre (S1) un signal radar au moyen d'une unité de transmission (2) dudit système radar adaptatif (1) ;
à recevoir (S2) un signal radar réfléchi au moyen d'une unité de réception (3) du système radar adaptatif (1) ;
à estimer une scène de radar en fonction du signal radar réfléchi reçu par ladite unité de réception (2) au moyen d'un moteur d'estimation d'état de radar (5) dudit système radar adaptatif (1) ;
à fournir une réponse de cible d'une cible et une réponse de fouillis d'un fouillis à partir du signal radar reçu par l'unité de réception (3) au moyen du moteur d'estimation d'état de radar ;
à catégoriser la réponse de cible pour extraire des critères d'état de cible, et
à catégoriser la réponse de fouillis pour extraire des critères d'état de fouillis au moyen du moteur d'estimation d'état de radar (5) ;
à appliquer un état de scène de radar représenté par les critères d'état de cible extraits et les critères de fouillis d'état extraits par ledit moteur d'estimation d'état de radar (5) à une mémoire de données stockant (6) un état de scène de radar dans une table de consultation de forme d'onde ;
à générer (S3) une fonction de récompense (R), en fonction d'indicateurs de performance dérivés du signal radar reçu par l'unité de réception du système radar adaptatif ;
à calculer (S4) une politique de commande (CP) en se basant sur la fonction de récompense générée (R) au moyen d'un apprentissage par renforcement ;

à commander (S5) des formes d'onde et des paramètres de signal du signal radar transmis en fonction de la politique de commande calculée (CP), dans lequel, si une entrée de mise en correspondance pour l'état de scène de radar appliqué est trouvée dans l'état de scène de radar dans la carte de forme d'onde de ladite mémoire de données (6), un planificateur (7) dudit système radar adaptatif lit une forme d'onde associée avec un ensemble correspondant de paramètres de signal à partir d'une mémoire de données (8) comprenant une bibliothèque de formes d'onde adaptatives (8A) avec un ensemble associé de paramètres de signal (8B) sous la forme d'une forme d'onde d'exploitation (EXP) et l'unité de transmission (2) transmet un signal radar qui comprend une séquence de formes d'onde d'exploitation (EXP) et de formes d'onde d'exploration (EXL) entrelacées en fonction de la politique de commande (CP) calculée par le moteur d'apprentissage par renforcement (4).

RF Sub-systems

Radar RF Transmitter

2

Adaptive Scheduler

7

Scene State – Waveform Map (MEMORY) 6

State Estimation 5

Radar RF Receiver

3

8

8B

8A

CP

Reinforcement Learning (RL) Controller 8B

R

Reward Function Generation 4A

4

Reinforcement Learning Engine

1

Fig 1

Fig 2

Reward
Function R

Reinforcement
Learning

Control
policy

*Fig3*

6

| Clutter-present | clutter-band | clutter-homogeneity | target-type | target movement | target direction | target class | Waveform | Pulse width | PRF | Transmit Power |
|---|---|---|---|---|---|---|---|---|---|---|
| yes | Wide | Any | Point | Slow | Any | Ground vehicle | GCP | Def. | Def. | Def. |
| yes | Narrow | Any | Point | Slow | Any | Any | SINR MI | Def. | Def. | Def. |
| no | NA | NA | Point | Fast | Any | Aerial vehicle | Costas sequence | Def. | Def. | Def. |
| ... | | | | | | | | | | |
| ... | | | | | | | | | | |

rSC1

rSC2

rSC3

Fig 4

| EXL 1 | EXL 2 | EXL 3 | EXL 4 | EXL 5 | EXL 6 | EXL N |
|-------|-------|-------|-------|-------|-------|-------|

*Fig 5A*

## During Operation – Known Scene

| EXP 1 | EXP 2 | EXL 1 | EXP 4 | EXP 5 | EXP 6 | | EXP N |

*Fig 5B*

**During Operation – Unknown Scene**

| REF | REF | EXL 1 | REF | EXL 2 | REF | | REF |

*Fig 5C*

Fig 6

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110084871 A1